# FASCICULE DE BREVET EUROPEEN

(11) **EP 4 558 796 B1**
(45) Date de publication et mention de la délivrance du brevet: **24.06.2026**
(21) Numéro de dépôt: 23750660.5
(22) Date de dépôt: 17.07.2023
(51) Int. Cl.: G01J 3/02, G01J 3/42, G01J 5/0806, G01J 5/08, C09J 163/00

(54) **ASSEMBLAGE PAR COLLAGE D'UN IMAGEUR TÉRAHERTZ SUR UNE LENTILLE ASSURANT UNE INTERFACE OPTIMALE**
VERBINDEN EINES TERAHERTZ-ABBILDUNGSGERÄTS MIT EINER LINSE ZUR BEREITSTELLUNG EINER OPTIMALEN SCHNITTSTELLE
BONDING A TERAHERTZ IMAGER TO A LENS TO PROVIDE AN OPTIMAL INTERFACE

(30) Priorité: 18.07.2022 FR 2207314
(43) Date de publication de la demande: 28.05.2025
(73) Titulaire: Tihive, 38000 Grenoble (FR)
(72) Inventeur: NASSERDDINE, Victoria, 38000 GRENOBLE (FR); SHERRY, Hani, 38000 Grenoble (FR); PRADA ROJAS, Carlos, 38000 GRENOBLE (FR)
(74) Mandataire: de Jong, Jean Jacques
(86) Numéro de dépôt international: PCT/FR2023/051104
(87) Numéro de publication internationale: WO 2024/018145

(56) Documents cités:
- US-A1- 2007 051 885
- HAHNLE SEBASTIAN ET AL: "An Ultrawideband Leaky Lens Antenna for Broadband Spectroscopic Imaging Applications", IEEE TRANSACTIONS ON ANTENNAS AND PROPAGATION, IEEE, USA, vol. 68, no. 7, 15 February 2020 (2020-02-15), pages 5675 - 5679, XP011797869, ISSN: 0018-926X, [retrieved on 20200706], DOI: 10.1109/TAP.2019.2963563
- HENKEL: "Technical Data Sheet Loctite 406", 1 February 2012 (2012-02-01), XP093022099, Retrieved from the Internet <URL:https://tds.henkel.com/tds5/Studio/ShowPDF/?pid=406-2012%20NEW&format=MTR&subformat=REAC&language=EN&plant=WERCS&authorization=2> [retrieved on 20230208]
- JANUSZ GRZYB ET AL: "A 288-GHz Lens-Integrated Balanced Triple-Push Source in a 65-nm CMOS Technology", IEEE JOURNAL OF SOLID-STATE CIRCUITS, IEEE, USA, vol. 48, no. 7, 1 July 2013 (2013-07-01), pages 1751 - 1761, XP011515898, ISSN: 0018-9200, DOI: 10.1109/JSSC.2013.2253403
- HENKEL: "HENKEL ELECTRONIC MATERIAL SOLUTIONS FOR RADAR, GUIDANCE SYSTEM, AND AVIATION INDUSTRIES", 1 January 2018 (2018-01-01), XP093022130, Retrieved from the Internet <URL:https://www.t-e-klebetechnik.de/upload/42483607-Loctite-Aerospace-Info-eng.pdf> [retrieved on 20230208]

## Description

### Domaine technique

L'invention est relative aux systèmes optiques utilisés en imagerie térahertz.

### Arrière-plan

Un imageur térahertz peut comprendre une matrice de capteurs réalisés sur une puce en silicium selon les techniques utilisées pour les semiconducteurs. Une telle puce est généralement assemblée dans un module où elle est associée à une lentille de collimation en silicium. La lentille est souvent de forme hyper hémisphérique, c'est-à-dire qu'il s'agit d'une sphère tronquée de manière à conserver plus de la moitié de la sphère. La puce est de préférence montée en appui sur la face tronquée de la lentille et centrée sur l'axe optique de la lentille.

Ce type de montage présente quelques difficultés, notamment en ce qui concerne l'automatisation du montage et la qualité optique de l'interface entre la puce et la lentille.

### Résumé

L'invention est définie par les revendications. Les documents "An Ultrawideband Leaky Lens Antenna for Broadband Spectroscopie Imaging Applications", Hahnle et al., XP011797869, et "A 288-GHz Lens-Integrated Balanced Triple-Push Source in a 65-nm CMOS Technology", Grzyb et al, XP011515898, présentent des exemples de l'état de la technique.

On prévoit de façon générale un module optique pour rayonnement térahertz comprenant un support incluant un évidement ayant une paroi généralement cylindrique débouchant sur une première face du support, et un orifice centré sur la paroi cylindrique et traversant un fond de l'évidement jusqu'à une deuxième face du support ; une lentille agencée dans l'évidement, la lentille ayant une section circulaire correspondant à la paroi cylindrique de l'évidement et une face plane en appui sur le fond de l'évidement ; et une puce comprenant des composants térahertz réalisés en technologie des semiconducteurs, la puce étant centrée dans l'orifice et fixée sur la face plane de la lentille. La puce peut être fixée sur la lentille par une colle disposée dans l'interface entre la puce et la lentille. La colle peut avoir les caractéristiques suivantes : a) résine Époxy polymérisable à chaud ; b) viscosité Brookfield CP51, 25°C, vitesse 5 rpm : 50000 mPa•s à ± 20 % ; et c) absence de charges pour rendre la colle conductrice électriquement ou thermiquement.

La colle peut être désignée dans le commerce par Ablebond 84-3 ou Loctite^{™} Ablestik 84-3.

La puce peut comprendre, sur une face du côté opposé à la lentille, des contacts reliés par des fils conducteurs à des contacts correspondants du support au bord de l'orifice, les contacts au bord de l'orifice étant eux-mêmes reliés à des contacts en périphérie du support par des pistes conductrices.

La deuxième face du support peut comprendre une cuvette au fond de laquelle est situé l'orifice avec ses contacts périphériques, la cuvette étant remplie d'un produit de protection des fils conducteurs et de la puce.

On prévoit également un procédé d'assemblage d'un module optique pour rayonnement térahertz, comprenant les étapes suivantes : réaliser un support incluant un évidement ayant une paroi généralement cylindrique débouchant sur une première face du support, et un orifice centré sur la paroi cylindrique et traversant un fond de l'évidement jusqu'à une deuxième face du support ; joindre le support à une lentille de sorte qu'une section circulaire de la lentille se centre par rapport à la paroi cylindrique de l'évidement et qu'une face plane de la lentille appuie sur le fond de l'évidement ; à l'aide d'une machine de placement optique, centrer dans l'orifice une puce comprenant des composants térahertz réalisés en technologie des semiconducteurs ; et fixer la puce sur la face plane de la lentille. L'étape de fixation de la puce peut comprendre le dépôt d'une colle du type susmentionné entre une face de la puce et la face plane de la lentille.

L'étape de jonction du support à la lentille peut comprendre les étapes suivantes : placer la lentille dans un orifice d'une plaque avec sa face plane tournée vers le haut ; et placer le support sur la face plane de la lentille avec une machine de placement optique, d'où il résulte qu'une pression exercée par la machine de placement sur la lentille provoque l'alignement de la face plane de la lentille avec le fond de l'évidement.

La colle ayant les caractéristiques susmentionnées peut en fait être utilisée pour assembler des éléments quelconques en silicium servant à réaliser un dispositif optique pour rayonnement térahertz.

### Description sommaire des dessins

Des modes de réalisation seront exposés dans la description suivante, faite à titre non limitatif en relation avec les figures jointes parmi lesquelles :
La figure 1 représente une vue en coupe d'un mode de réalisation de module optique d'imageur térahertz ;
La figure 2 est une vue en perspective du module optique ; et
La figure 3 illustre une étape de montage de modules optiques.

### Description détaillée

Pour automatiser l'assemblage de puces sur un support quelconque, les puces sont généralement manipulées par des machines de placement optiques "pick and place" qui sont capables de placer les puces avec précision par rapport à un repère visuel du support.

Dans le cas de puces à monter dans des modules incluant une lentille en silicium, il s'avère que la face plane de la lentille destinée à recevoir la puce offre très peu de contraste, même en y gravant des motifs, de sorte que le repérage optique de la machine de placement est souvent mis en échec ou faussé. Il en résulte que la puce est trop souvent mal centrée dans une chaîne de fabrication automatisée.

Une autre difficulté réside dans la qualité optique de l'interface entre la puce et la lentille. Les colles disponibles pour coller une puce en silicium sont généralement prévues pour un support sans besoin de transmission optique (céramique, métal ou résine). On a constaté que ces colles n'avaient pas de bonnes propriétés de transmission d'ondes térahertz, de sorte qu'on dépose des gouttes de colle à la périphérie de la puce plutôt que dans l'interface. Toutefois, selon la fluidité de la colle déposée, celle-ci parvient à pénétrer partiellement dans l'interface par capillarité, provoquant un appui bancal de la puce sur la face de la lentille et une détérioration de la qualité de la transmission d'ondes térahertz en périphérie de la matrice de capteurs.

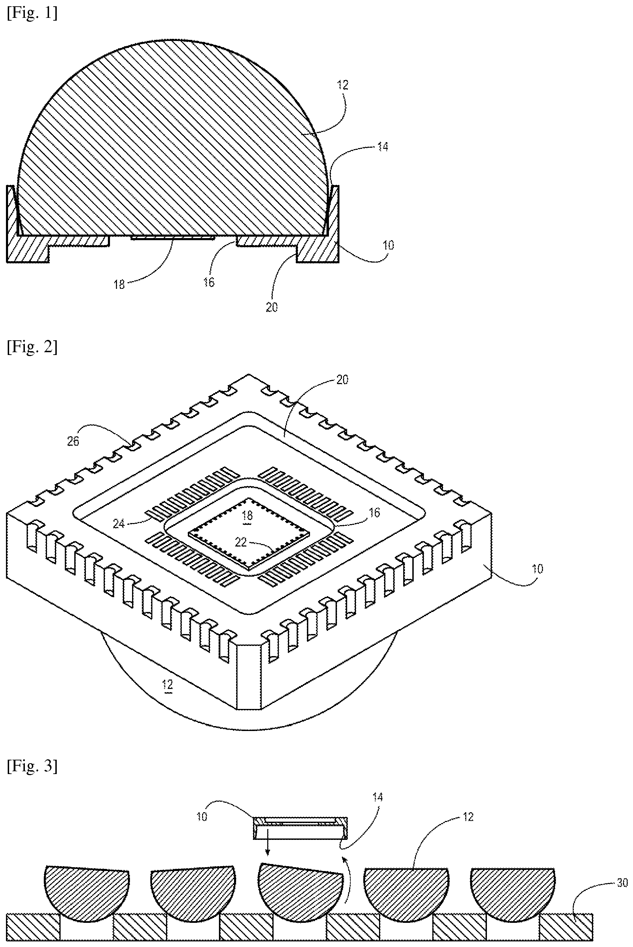

La figure 1 représente une vue en coupe d'un mode de réalisation de module optique d'imageur térahertz qui surmonte les difficultés de centrage de la puce par rapport à la lentille.

Le module comprend un support 10 qui peut être réalisé selon les techniques des circuits imprimés multicouches. Le support a une face conçue pour recevoir avec centrage une lentille en silicium 12. La lentille 12 est représentée à titre d'exemple comme hyper hémisphérique, ce qui correspond au cas le plus courant, mais elle pourrait avoir d'autres formes, ayant généralement une section circulaire.

Plus spécifiquement, la face du support destinée à recevoir la lentille, la face supérieure dans la figure, comprend un évidement ayant une paroi généralement cylindrique 14. Le fond de l'évidement est conçu pour recevoir en appui la face plane de la lentille. La paroi 14 a un diamètre correspondant au plus grand diamètre de la lentille 12. Lorsque la lentille est hyper hémisphérique, comme cela est représenté, le plus grand diamètre (l'équateur) est situé à l'écart de la face plane ; dans ce cas, la paroi 14 peut s'évaser, comme cela est représenté, pour épouser localement la forme de la lentille.

Le fond de l'évidement est percé d'un orifice 16 centré par rapport à la paroi cylindrique 14 et ouvert sur la deuxième face du support, la face inférieure dans la figure. Une puce 18 comportant les composants térahertz est fixée sur la face de la lentille 12, à l'intérieur de l'orifice 16. En centrant la puce 18 par rapport à l'orifice 16 lors de son placement et sa fixation, on obtient un centrage précis de la puce par rapport à la lentille 12. Cette précision est garantie notamment par la chaîne de cotes entre l'orifice 16 et la paroi cylindrique 14, qui implique une seule pièce, en combinaison avec le fait que le repérage optique des bords de l'orifice 16 par la machine de placement est particulièrement aisé.

Si d'aventure le procédé de fabrication du support n'est pas très précis quant à la réalisation des bords de l'orifice 16, la face inférieure du support 10 pourra comporter des pistes conductrices servant de repères optiques, notamment des contacts périphériques de l'orifice 16, représentés plus loin, servant à relier la puce à des circuits du support. De tels repères peuvent aussi être placés avec précision par rapport à la paroi cylindrique 14, et offrent un contraste élevé rendant le repérage optique aisé.

Comme cela est représenté, la face inférieure du support 10 forme une cuvette 20 au fond de laquelle débouche l'orifice 16. Cette cuvette peut être remplie d'un produit de protection de la puce 18, une fois que celle-ci est fixée et reliée électriquement au support.

La figure 2 est une vue en perspective de dessous du module optique de la figure 1. Cette vue révèle notamment le fond de la cuvette 20 et un exemple de structure de connexion électrique de la puce 18. La face apparente de la puce 18 peut être sa face active, c'est-à-dire la face sur laquelle sont réalisés les composants et les contacts électriques. Le rayonnement térahertz est alors reçu par les composants, par exemple une matrice de récepteurs térahertz, à travers la face arrière de la puce. Cette face active comporte des rangées de contacts périphériques 22 qui sont reliés par des fils conducteurs (non représentés) à des contacts respectifs 24 du support, disposés en rangées aux bords de l'orifice 16. Ces contacts 24 peuvent aussi servir de repère précis pour une reconnaissance optique de la machine de placement.

Les contacts 24 au bord de l'orifice sont à leur tour reliés à des contacts 26 disposés à la périphérie du support par des pistes conductrices, non visibles, réalisées par exemple dans des couches internes du support dans le cas d'un circuit imprimé multicouches.

La cuvette 20 peut être remplie d'un produit de protection qui noie la puce et les fils conducteurs.

La figure 3 illustre une étape d'assemblage d'un lot de modules. Les lentilles 12 sont disposées avec leurs faces planes tournées vers le haut dans des orifices circulaires d'une plaque 30. Les parties sphériques des lentilles forment ainsi des rotules permettant un auto-alignement. Une machine de dosage de colle dépose, par exemple, quatre gouttes de colle régulièrement espacées à la périphérie de la face plane de chaque lentille, par exemple, au large des quatre bords droits de l'orifice 16 des supports à venir. Une machine de placement dépose ensuite les supports 10 sur les lentilles.

Les machines de dosage et de placement peuvent se repérer optiquement par rapport au contour des lentilles. Même si les faces planes des lentilles ne sont pas forcément horizontales, comme les lentilles sont hyper-hémisphériques, le contour perçu d'en haut par les machines reste circulaire.

Selon une alternative pour aligner les machines sur les lentilles, celles-ci peuvent être réglées avec les coordonnées des orifices de la plaque, la plaque et ses orifices pouvant être usinés avec précision.

Dans la phase de placement des supports 10, au moment du contact d'un support avec la face plane de la lentille correspondante, comme cela est illustré pour l'une de lentilles, la lentille bascule dans son orifice de sorte que sa face plane se redresse et s'aligne avec le fond de l'évidement 14, et la lentille se centre entre les parois cylindriques. Dans la phase précédente de dépôt de gouttes de colle, il est possible que les lentilles basculent aussi sous l'effet du contact avec le buse de la machine de dosage, mais le défaut d'alignement résultant est également rattrapé dans la phase de placement des supports.

Ensuite, les supports 10 étant en place et centrés par rapport aux lentilles 12, les orifices 16 servent de repère optique pour fixer les puces sur la partie exposée des faces planes des lentilles. La machine de dosage vient déposer de la colle aux emplacements des puces, puis la machine de placement vient déposer les puces.

Les modules sont ensuite transférés dans un four pour polymériser la colle, puis dans un poste de soudage où des fils conducteurs sont soudés entre les contacts 22, 24 des puces et des supports, et les cuvettes 20 sont remplies de produit de protection. Pour ces opérations, il est préférable que les lentilles ne basculent plus. Ainsi, par exemple, les modules sont préalablement transférés sur une plaque ayant des orifices de diamètre plus grand que les lentilles, des sorte que les supports 10 reposent à plat sur la plaque.

La fixation de la puce 18 sur la face plane de la lentille 12 a été tentée par collage direct, à savoir en déposant une goutte de colle à l'interface entre la puce et la lentille. Bien qu'il soit notoire que cela pose des problèmes de transmission des ondes térahertz, les inventeurs ont conduit divers essais. Ces essais ont montré que la plupart des colles du commerce destinées à fixer des puces sur un support traditionnel, généralement métallique, détérioraient en effet significativement la transmission des ondes térahertz entre la lentille et la puce. Pourtant, une colle spécifique a été révélée qui offre des caractéristiques de transmission satisfaisantes. Il s'agit de la colle désignée dans le commerce par Ablebond 84-3 ou Loctite^{™} Ablestik 84-3.

Cette colle a les caractéristiques suivantes qui lui confèrent de bonnes propriétés pour réaliser des interfaces entre des éléments en silicium destinés de façon générale à réaliser des fonctions optiques dans le domaine du térahertz :
Résine époxy polymérisable à chaud.
Viscosité Brookfield CP51, 25°C, vitesse 5 rpm : 50000 mPa•s.
Absence de charges pour rendre la colle conductrice électriquement ou thermiquement. La colle susmentionnée est isolante électriquement.
Une conduction thermique de 0,8 W/mK à 121°C, réalisable sans charges métalliques.

La caractéristique la plus importante est l'absence de charges qui nuisent à la transmission des ondes térahertz, notamment des particules métalliques.

La viscosité est également importante. La valeur indiquée est prévue pour réaliser des interfaces en phase liquide de 25 à 50 µm avec un chanfrein de 25 à 50 % de la hauteur de la puce. Pour obtenir de bonnes caractéristiques de transmission d'ondes térahertz, on vise de préférence une interface moins épaisse que 25 µm en augmentant la pression exercée sur la puce au moment de son placement. La valeur de viscosité indiquée est suffisamment élevée, dans ce cas, pour éviter un excès de fluage sous la puce qui laisseraient des vides à l'interface, mais suffisamment basse pour ne pas avoir à exercer une pression trop importante pour réaliser des interfaces inférieures à 25 µm d'épaisseur. La valeur optimale de la viscosité peut varier dans une certaine marge autour de celle indiquée ci-dessus, par exemple ± 20 %.

La base de la colle, ici une résine époxy polymérisable à chaud, s'avère être adaptée au collage silicium-sur-silicium et présente des caractéristiques satisfaisantes de transmission d'ondes térahertz.

La conduction thermique est moins importante, car les puces envisagées dissipent peu de puissance.

## Revendications

1. Procédé d'assemblage d'un dispositif optique compatible avec un rayonnement térahertz, comprenant les étapes suivantes :
prévoir une lentille en silicium (12) et une puce en silicium incluant des composants térahertz (18), ayant chacune une face plane ;
déposer sur la face plane de la lentille ou de la puce une colle ayant les caractéristiques suivantes :
résine Époxy polymérisable à chaud,
viscosité Brookfield CP51, 25°C, vitesse 5 rpm : 50000 mPa•s à ± 20 %, et
absence de charges pour rendre la colle conductrice électriquement ou thermiquement ; et
appliquer la face plane de la puce sur la face plane de la lentille.

2. Procédé selon la revendication 1, dans lequel la colle est désignée dans le commerce par Ablebond 84-3 ou Loctite^{™} Ablestik 84-3.

## Patentansprüche

1. Verfahren zur Montage einer mit Terahertz-Strahlung kompatiblen optischen Vorrichtung, umfassend die folgenden Schritte: Bereitstellen einer Siliziumlinse (12) und eines Siliziumchips, der Terahertz-Komponenten (18) enthält, wobei jeder eine ebene Fläche aufweist; Aufbringen eines Klebstoffs auf die ebene Fläche der Linse oder des Chips, der folgende Eigenschaften aufweist: warmhärtbares Epoxidharz, Brookfield-CP51-Viskosität, 25 °C, Drehzahl 5 rpm: 50.000 mPa·s bei ± 20 %, sowie das Fehlen von Füllstoffen zur elektrischen oder thermischen Leitfähigkeit des Klebstoffs; und Aufbringen der ebenen Fläche des Chips auf die ebene Fläche der Linse.

2. Verfahren nach Anspruch 1, wobei der Klebstoff im Handel unter der Bezeichnung Ablebond 84-3 oder Loctite^{™} Ablestik 84-3 bekannt ist.

## Claims

1. A method for assembling an optical device compatible with terahertz radiation, comprising the following steps:
providing a silicon lens (12) and a silicon chip including terahertz components (18), each having a planar face;
depositing on the planar face of the lens or of the chip an adhesive having the following characteristics:
epoxy resin curable by heat,
Brookfield viscosity CP51, 25°C, speed 5 rpm: 50000 mPa•s ± 20%, and
absence of fillers to make the adhesive electrically or thermally conductive; and
applying the planar face of the chip to the planar face of the lens.

2. Method according to claim 1, wherein the adhesive is designated commercially as Ablebond 84-3 or Loctite^{™} Ablestik 84-3.
